# EUROPÄISCHE PATENTSCHRIFT

(11) **EP 2 427 941 B1**
(45) Veröffentlichungstag und Bekanntmachung des Hinweises auf die Patenterteilung: **29.10.2014**
(21) Anmeldenummer: 10710353.3
(22) Anmeldetag: 26.03.2010
(51) Int. Cl.: H02H 7/18, H01M 2/34, H01M 10/48, B60L 3/04, H02H 5/08

(54) **KURZSCHLUSSSICHERUNG FÜR EINE ELEKTROFAHRZEUGBATTERIE**
SHORT-CIRCUIT PROTECTION FOR AN ELECTRIC VEHICLE BATTERY
PROTECTION CONTRE LES COURTS-CIRCUITS DE LA BATTERIE D'UN VÉHICULE ÉLECTRIQUE

(30) Priorität: 08.05.2009 DE 102009020559
(43) Veröffentlichungstag der Anmeldung: 14.03.2012
(73) Patentinhaber: Auto-Kabel Management GmbH, 79688 Hausen i.W. (DE)
(72) Erfinder: SCHUMACHER, Jens, 79688 Hausen im Wiesental (DE); LIETZ, Franz-Josef, 46049 Oberhausen-Lirich (DE)
(74) Vertreter: Cohausz & Florack
(86) Internationale Anmeldenummer: PCT/EP2010/053978
(87) Internationale Veröffentlichungsnummer: WO 2010/127911

(56) Entgegenhaltungen:
- EP-A1- 2 117 095
- JP-A- 2004 007 919
- KR-A- 20070 093 753
- US-A1- 2008 013 241

## Beschreibung

Der Gegenstand betrifft eine Vorrichtung zur elektrischen Absicherung eines Elektrofahrzeuges sowie ein Elektrofahrzeug mit einer solchen Vorrichtung als auch ein Verfahren zur elektrischen Absicherung eines Elektrofahrzeuges.

In der Zukunft wird im Automobilbau die Verwendung von Elektromotoren eine immer höhere Bedeutung erhalten. Es existieren gegenwärtig diverse Konzepte für Hybridfahrzeuge als auch reine Elektrofahrzeuge. Insbesondere bei reinen Elektrofahrzeugen muss die gesamte für den Antrieb benötigte Energie in Batterien gespeichert werden. Diese Batterien sind regelmäßig Hochvolt-Batterien, welche mehrere 100 V Spannung zur Verfügung stellen. Maximalströme von mehreren 100 A sind bei diesen Batterien möglich.

Gerade durch die immer größere Verbreitung von Elektromotoren und somit von Hochvolt-Batterien rücken Sicherheitsaspekte stärker in den Fokus. Bei der Verwendung von Batterien für Elektrofahrzeuge ist die Klemmenspannung häufig derart hoch, dass eine elektrische Isolation zwischen den Batteriepolen eine hohe Durchschlagsfestigkeit aufweisen muss. Geraten solche Fahrzeuge jedoch in schwere Unwetter bzw. wird die maximale Wattiefe erreicht, können die Pole der Batterie mit Wasser in Berührung gelangen. Dieses Wasser kann zu Kurzschlüssen zwischen den Polen oder innerhalb der Batterie führen. Aufgrund der hohen Energien, die die Batterien für Elektrofahrzeuge zur Verfügung stellen können, führen Kurzschlüsse häufig zu Schäden an Personen oder zu Bränden.

Aus KR 2007 093753 und EP 2 117 095 ist es bekannt, Batterien für Elektrofahrzeuge gegenüber Feuchtigkeit abzusichern. Demgegenüber lag dem Gegenstand die Aufgabe zu Grunde, eine Vorrichtung zu einer zuverlässigeren Absicherung eines Elektrofahrzeuges zur Verfügung zu stellen, welche in besonders einfacher Weise auch bei Feuchtigkeit in der Batterie Schäden an Fahrzeug und Personen durch elektrische Kurzschlüsse verhindert.

Diese Aufgabe wird gegenständlich durch eine Vorrichtung nach Anspruch 1 gelöst.

Es ist erkannt worden, dass Feuchtigkeit im Bereich der Fahrzeugbatterie zu Kurzschlüssen führen kann. Um diese Kurzschlüsse sicher zu verhindern, wird gemäß eines Ausführungsbeispiels vorgeschlagen, die Fahrzeugbatterie von der elektrischen Verteilung bei detektierter Feuchtigkeit zu trennen. Hierbei kann die elektrische Leitung eine Verbindung der Batterie mit der elektrischen Verteilung innerhalb des Fahrzeugs sein.

Insbesondere wenn Flüssigkeit unmittelbar an die Pole der Fahrzeugbatterie gelangt, müssen diese von der elektrischen Verteilung getrennt werden. Ansonsten kann durch das Wasser ein Kurzschluss erzeugt werden. Dieser Kurzschluss kann aufgrund der hohen Spannungen in den Fahrzeugen zu Personenschäden führen. Auch können Brände durch solche Kurzschlüsse entstehen.

In Gebieten, in denen starke Regenfälle zu erwarten sind, kann das durch den Regen in den Bereich der Batterie des Fahrzeuges gelangende Wasser zu solchen Kurzschlüssen führen. Die Batterie des Fahrzeugs kann beispielsweise im Motorraum oder in anderen Bauräumen des Fahrzeugs, beispielsweise in Bereich des Kofferraums oder des Unterbodens angeordnet werden. Mit der gegenständlichen Vorrichtung ist das Eindringen von Wasser in den Bereich der Batterie oder in die Batterie detektierbar und die elektrische Leitung der Batterie trennbar.

Insbesondere bei Geländefahrzeugen ist davon auszugehen, dass, wenn diese die maximale Wattiefe erreichen, die Fahrzeugbatterie in Kontakt mit Wasser gelangt. Auch hier muss aus Sicherheitsgründen eine sichere Trennung der Batterie von der elektrischen Verteilung gewährleistet werden.

Die elektrische Leitung kann eine Verbindung von Batteriezellen innerhalb der Batterie sein. Insbesondere bei Hochvoltbatterien kann eine Batterie aus einer Mehrzahl von Zellen zusammengeschaltet sein. Die einzelnen Zellen haben geringe elektrische Potentiale. Durch eine Serienschaltung mehrerer Zellen kann jedoch eine große elektrische Spannung erzeugt werden. Um dies zu verhindern, kann die Verbindung zwischen den Zellen im Falle einer detektierten Feuchtigkeit in der Fahrzeugbatterie getrennt werden. Somit wird verhindert, dass an den Anschlusspolen der Batterie das elektrische Potential von in Serie geschalteten Zellen anliegt.

Auch ist in Überflutungsgebieten davon auszugehen, dass Fahrzeuge von übertretenden Flüssen mitgerissen werden. Im Bereich dieser Fahrzeuge besteht durch den elektrischen Kontakt zwischen der Batterie und dem Wasser eine Gefahr für sich nähernde Personen. Um diese Gefahr zu minimieren, muss die Trenneinrichtung Leitung der Batterie trennen, so dass das elektrische Potential in der Batterie von der Feuchtigkeit getrennt wird.

Erfindungsgemäß ist vorgesehen, dass die Detektionseinrichtung in der Fahrzeugbatterie angeordnet ist. Somit kann eindringendes Wassers detektiert werden. Insbesondere bei sogenannten Batterie-Packs ist eindringende Feuchtigkeit ein Ernst zu nehmendes Problem. Beispielsweise kann die gegenständliche Fahrzeugbatterie eine Lithium-Ionen-Batterie sein, welche aus einer Vielzahl gleichartiger Zellen zusammengeschaltet ist.

Gemäß eines vorteilhaften Ausführungsbeispiels wird vorgeschlagen, dass die Fahrzeugbatterie eine Hochvolt-Batterie ist. Eine Hochvolt-Batterie ist regelmäßig eine Batterie, welche Spannungen von über 100 V zur Verfügung stellt. Solche Hochvolt-Batterien kommen insbesondere in Elektrofahrzeugen zum Einsatz. Gerade bei der Verwendung von Hochvolt-Batterien ist eindringende Feuchtigkeit ein enormes Sicherheitsrisiko. Um zu gewährleisten, dass Hochvolt-Batterien durch eintretendes Wassers nicht kurzgeschlossen werden, wird gegenständlich die Trenneinrichtung aktiviert.

Gemäß eines vorteilhaften Ausführungsbeispiels wird vorgeschlagen, dass die Detektionseinrichtung an der Fahrzeugbatterie angeordnet ist. Insbesondere Feuchtigkeit im Bereich der Fahrzeugbatterie kann zu Kurzschlüssen führen. Aus diesem Grunde wird die Detektionseinrichtung an der Fahrzeugbatterie angeordnet. Somit wird sichergestellt, dass, sobald Feuchtigkeit in die Fahrzeugbatterie gelangt, insbesondere sobald die Fahrzeugbatterie von Flüssigkeit umgeben ist, eine Trennung der Pole der Batterie von der Verteilung erfolgt.

Das Zusammenschalten vieler Zellen einer Batterie erlaubt es, die erforderliche Leistung für eine Fahrzeugbatterie zur Verfügung zu stellen. Andere Zellen, die an sich Niedervoltbatterien sind, können zusammengeschaltet sein. So zusammengeschaltete Batterie-Packs müssen sicher vor Kurzschlüssen innerhalb des Batterie-Packs geschützt werden, da ansonsten diese Kurzschlüsse zu einer Zerstörung des Batterie-Packs führen können. Aus diesem Grunde wird die Detektionseinrichtung in der Fahrzeugbatterie angeordnet, um Feuchtigkeit in der Fahrzeugbatterie zu detektieren. Somit kann bei eindringender Feuchtigkeit die Verbindung zwischen den Zellen des Batteriepacks getrennt werden.

Um insbesondere aufsteigende Feuchtigkeit, beispielsweise aufsteigendes Wasser, frühzeitig erkennen zu können, wird vorgeschlagen, dass die Detektionseinrichtung unterhalb der Batteriekontakte bzw. unterhalb des Batteriebodens angeordnet ist. Somit führt diese Detektionseinrichtung bereits zu einer Aktivierung der Trenneinrichtung, bevor die Feuchtigkeit in den Bereich der Batteriekontakte oder der Zellen der Batterie gelangt ist. Insbesondere bei steigenden Flüssen oder beim Durchfahren von Flüssen durch Off-Road Fahrzeuge ist eine solche Anordnung vorteilhaft, da die Batterie von der Verteilung getrennt oder die Zellen der Batterie voneinander getrennt werden, sobald sich die Flüssigkeit von unten nähert.

Häufig ist über Starkstromleitungen das elektrische Potential der Batterie in dem Fahrzeug verteilt. Solche Leitungen können auch im Unterboden des Fahrzeuges bzw. innerhalb des Fahrzeuges verlaufen und unterhalb des Niveaus der Batteriekontakte liegen. Auch solche Leitungen müssen insbesondere im Bereich von elektrischen Abgriffen, welche nicht isoliert sind, vor Kurzschlüssen durch auftretende Feuchtigkeit geschützt werden. Aus diesem Grund wird vorgeschlagen, dass die Detektionseinrichtung im Bereich des tiefsten Punktes der die Spannung der Fahrzeugbatterie führenden elektrischen Verteilung angeordnet ist. Die Hauptverteilung der Fahrzeugbatterie führt die Spannung der Fahrzeugbatterie. Hiervon zweigen Unterverteilungen ab, welche mit geringeren Spannungen betrieben werden können. Insbesondere jedoch die elektrische Verbindung zwischen der Fahrzeugbatterie und dem Elektromotor führt die Spannung der Fahrzeugbatterie. Gerade eine solche elektrische Verbindung muss sicher vor einem Kurzschluss geschützt werden. Aus diesem Grund wird am tiefsten Punkt zumindest dieser Verbindung zwischen Batterie und Motor die Detektionseinrichtung angeordnet. Aufsteigendes Wasser kann somit frühzeitig detektiert werden und die Batteriekontakte von der Verteilung getrennt werden.

Gerade an nur teilweise isolierten Abzweigungen der Verteilung ist eine sicher Detektion von Feuchtigkeit hilfreich, um im Falle aufsteigender Flüssigkeit im Bereich der nicht oder nur teilweise isolierten Abzweigung die Leitung von der Batterie zu trennen.

Gemäß eines vorteilhaften Ausführungsbeispiels wird vorgeschlagen, dass die Detektionseinrichtung einen Feuchtigkeitssensor aufweist. Der Feuchtigkeitssensor detektiert Feuchtigkeit in unterschiedlichen Konzentrationen. Beispielsweise ist es möglich, dass der Feuchtigkeitssensor so eingestellt wird, dass er lediglich anschlägt, sobald er im Wesentlichen vollständig von Flüssigkeit umgeben ist. Hierbei kann der Feuchtigkeitssensor derart gestaltet sein, dass Wassertropfen als auch Regentropfen nicht ausreichend sind, um den Feuchtigkeitssensor zu aktivieren. Vielmehr kann der Feuchtigkeitssensor so gebildet sein, dass er lediglich aktiviert wird, wenn dieser vollständig mit Feuchtigkeit benetzt ist. Beispielsweise kann der Feuchtigkeitssensor eine Fläche von einem oder mehreren Quadratzentimetern aufweisen. Erst, wenn die gesamte Fläche in Kontakt mit Feuchtigkeit kommt, kann der Feuchtigkeitssensor aktiviert werden.

Gemäß eines vorteilhaften Ausführungsbeispiels wird vorgeschlagen, dass der Feuchtigkeitssensor ein Wassersensor ist. Dieser kann beispielsweise derart gebildet sein, dass er nur dann aktiviert wird, wenn er von Wasser umgeben ist.

Auch wird vorgeschlagen, dass die Detektionseinrichtung zumindest einen Regensensor aufweist. Der Regensensor kann so gestaltet sein, dass bei einem Starkregen die Detektionseinrichtung aktiviert wird. Hierdurch wird verhindert, dass bei Starkregen elektrische Kurzschlüsse an der Fahrzeugbatterie verursacht werden können.

Gemäß eines vorteilhaften Ausführungsbeispiels wird vorgeschlagen, dass die Trenneinrichtung die Leitung der Batterie mechanisch trennt. Insbesondere ist es möglich, dass die Trenneinrichtung die Batteriekontakte zerstörungsfrei von der elektrischen Verteilung trennt. Eine solche Trennung kann beispielsweise wieder aufgehoben werden. Dabei ist es beispielsweise möglich, dass die Trenneinrichtung eine erste Stufe der Trennung mittels eines zerstörungsfreien mechanischen Trennmittels bewirkt. Eine solche Trennung kann beispielsweise bei einem detektierten starken Regen aktiviert werden. Schwächt sich der Regen ab, so kann beispielsweise automatisch der elektrische Kontakt wieder hergestellt werden.

Gemäß eines vorteilhaften Ausführungsbeispieles wird vorgeschlagen, dass die Leitung der pyrotechnisch getrennt wird. Die Trenneinrichtung kann so gestaltet sein, dass die Trennung unwiderruflich ist. Bei der Trennung kann eine Zerstörung der elektrischen Verbindung bewirkt werden. Eine solche unwiderrufliche Trennung die nur durch Austausch der Trennmittel behebbar ist, kann insbesondere dann von Vorteil sein, wenn das zu schützende Fahrzeug gänzlich von Wasser umspült ist. Auch ist es möglich, dass die pyrotechnische Trennung in Kombination mit der zuvor erwähnten mechanischen Trennung zum Einsatz kommt. So kann bei einem starken Regen zunächst eine mechanische Trennung erfolgen, welche widerherstellbar ist. Erst wenn eine bestimmte Wattiefe überschritten wird oder das Fahrzeug von Wasser umspült wird, kann die pyrotechnische Trennung zum Einsatz kommen.

Ein weiterer Gegenstand ist ein Elektrofahrzeug mit einer Vorrichtung nach Anspruch 1.

Gemäß eines weiteren Gegenstandes wird ein Verfahren zur elektrischen Absicherung eines Elektrofahrzeuges vorgeschlagen mit den Schritten Ermitteln von Feuchtigkeit innerhalb des Elektrofahrzeugs, und elektrisches Trennen der einer Leitung der Fahrzeugbatterie bei detektierter Feuchtigkeit.

Nachfolgend wird der Gegenstand anhand einer Ausführungsbeispiele zeigenden Zeichnung näher erläutert. In der Zeichnung zeigen:
- Fig. 1: eine schematische Ansicht einer Absicherungsvorrichtung im inaktiven Zustand;
- Fig. 2: eine schematische Ansicht einer Absicherung im aktivierten Zustand;
- Fig. 3: eine schematische Ansicht einer Absicherung ebenfalls im aktivierten Zustand;
- Fig. 4: ein Flussdiagramm eines gegenständlichen Verfahrens gemäß eines vorteilhaften Ausführungsbeispiels.

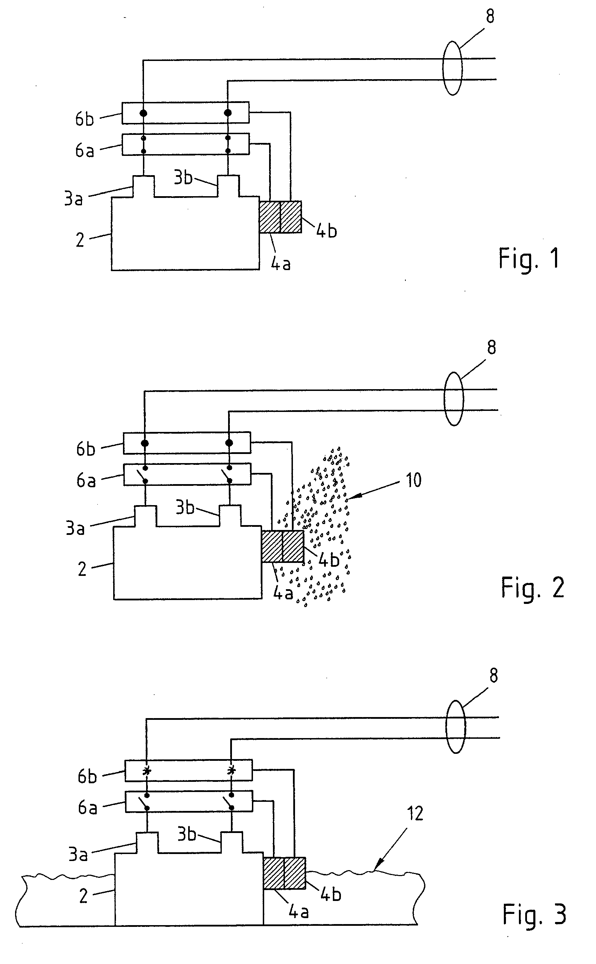

Figur 1 zeigt eine Hochvolt-Batterie 2 mit Batterieanschlusspolen 3a, 3b. Die Anschlusspole 3a und 3b sind unterschiedlicher Polarität. Elektrisch verbunden mit den Anschlusspolen 3 ist eine elektrische Verteilung 8 gebildet aus zumindest zwei Kabeln, welche die Batterie 2 mit einem nicht dargestellten Elektromotor des Kraftfahrzeuges verbinden. Zwischen dem Elektromotor und den Batteriepolen 3 ist eine Trenneinrichtung 6 vorgesehen, welche aus zwei Trenneinrichtungen 6a, b gebildet ist. Die Trenneinrichtung 6a ist eine mechanische Trenneinrichtung, welche eine zerstörungsfreie Trennung der Batteriepole 3 von der elektrischen Verteilung 8 bewirken kann. Die Trenneinrichtung 6b ist eine pyrotechnische Trenneinrichtung, welche die Batteriepole 3 von der elektrischen Verteilung 8 durch Zerstörung des Strompfades trennen kann. Weiter in Figur 1 ist eine Detektionseinrichtung 4 gebildet aus einem Regensensor 4a und einem Wassersensor 4b gezeigt.

Mittels der Detektionseinrichtung 4 kann die Trenneinrichtung 6 angesprochen werden, derart, dass die Trenneinrichtung 6 die Batteriepole 3 von der elektrischen Verteilung 8 bei Aktivierung trennt.

Figur 2 zeigt schematisch eine Aktivierung der mechanischen Trenneinrichtung 6a. In Figur 2 ist schematisch eine Vielzahl von Regentropfen 10 dargestellt. Mittels des Regensensors 4a können die Regentropfen 10 detektiert werden. Detektiert der Regensensor 4a die Regentropfen 10, so übergibt der Regensensor 4a ein Aktivierungssignal an die mechanische Trenneinrichtung 6a. In der mechanischen Trenneinrichtung 6a wird ein Schalter zerstörungsfrei geöffnet, derart, dass zumindest einer der Batteriepole 3 von der elektrischen Verteilung 8 elektrisch getrennt wird. Bevorzugt werden beide Batteriepole 3 von der elektrischen Verteilung 8 elektrisch getrennt.

Detektiert der Regensensor 4a, dass kein weiterer Regen 10 vorhanden ist, so kann ein erneutes Aktivierungssignal an die mechanische Trenneinrichtung 6a übermittelt werden und der Schalter kann geschlossen werden. Hierdurch ist es möglich, dass bei Starkregen, der nach einer gewissen Zeit aufhört, eine Trennung der elektrischen Verteilung 8 von den Batteriepolen 3 erfolgt, wobei die Trennung jedoch wieder rückgängig gemacht werden kann. Der Regensensor 4a als auch die mechanische Trenneinrichtung 6a sind optional.

Eine sichere Trennung der elektrischen Verteilung 8 von den Batteriepolen 3 muss zumindest dann gewährleistet sein, wenn die Batterie 2 von Wasser umgeben ist. Figur 3 zeigt schematisch eine solche Fallgestaltung. Figur 3 zeigt, dass die Batterie 2 von Wasser 12 umgeben ist. Das Wasser 12 bedingt, dass sowohl der Regensensor 4a als auch der Wassersensor 4b aktiviert werden und entsprechende Aktivierungssignale an die mechanische Trenneinrichtung 6a und die pyrotechnische Trenneinrichtung 6b übermitteln.

Mittels des Regensensors 4a wird die mechanische Trenneinrichtung 6a aktiviert, wie in Zusammenhang mit Figur 2 bereits geschildert. Mittels des Wassersensors 4b ist das Wasser 12 detektierbar und es wird ein Aktivierungssignal an die pyrotechnische Trenneinrichtung 6b übermittelt. Mittels des Aktivierungssignals wird ein pyrotechnisches Trennmittel in der Trenneinrichtung 6b derart aktiviert, dass die Verbindung zwischen Batteriepol 3 und elektrischer Verteilung 8 elektrisch getrennt wird. Hierbei wird der Strompfad zerstört. Ein Wiederherstellen des Strompfades ist nur durch Austausch der pyrotechnischen Trenneinrichtung 6b möglich. Dies gewährleistet, dass bei einer Überflutung des Fahrzeuges eine sichere Trennung der elektrischen Verteilung 8 von dem Batteriepol 2 erfolgt, welche nicht ohne weiteres wiederhergestellt werden kann.

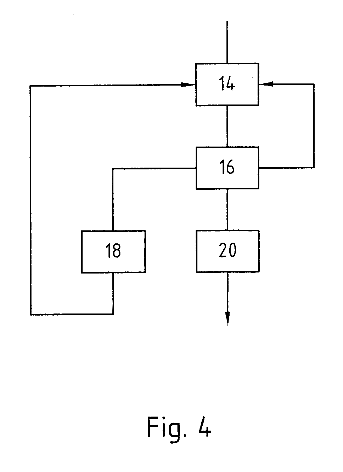

Figur 4 zeigt schematisch einen Ablauf eines gegenständlichen Verfahrens.

In einem ersten Schritt 14 wird der Regensensor 4a und der Wassersensor 4b aktiviert.

In einem zweiten Schritt 16 wird der Status des Regensensors 4a und des Wassersensors 4b abgefragt. Meldet keiner der Sensoren 4a, 4b eine Aktivierung durch Regen oder Wasser, so kehrt das Verfahren in Schritt 14 zurück.

Wird in Schritt 16 durch den Regensensor 4a ein Auftreten von Regentropfen 10 detektiert, so kann in Schritt 18 verzweigt werden. In Schritt 18 wird mittels des Regensensors 4a die mechanische Trenneinrichtung 6a aktiviert, derart, dass zerstörungsfrei die Verbindung zwischen Batteriepol 3 und elektrischer Verteilung 8 gelöst wird. Daraufhin wird zu Schritt 14 zurückgekehrt.

Wird in Schritt 16 mittels des Wassersensors 4b detektiert, dass Wasser 12 die Batterie 2 umgibt, so wird in Schritt 20 verzweigt. In Schritt 20 wird zumindest die pyrotechnische Trenneinrichtung 6b mittels des Wassersensors 4b derart aktiviert, dass das pyrotechnische Trennmittel gezündet wird und die elektrische Verbindung zwischen Batteriepol 3 und elektrischer Verteilung 8 getrennt wird. Diese Trennung ist nicht wiederherstellbar.

Mittels des gegenständlichen Verfahrens und der gegenständlichen Vorrichtung wird eine erhöhte Sicherheit von Elektrofahrzeugen zur Verfügung gestellt. Hochvolt-Batterien können sicher von der elektrischen Verteilung getrennt werden, so dass Schäden an Personen und Fahrzeugen durch elektrische Kurzschlüsse sicher verhindert werden.

## Patentansprüche

1. Vorrichtung zur elektrischen Absicherung eines Elektrofahrzeugs mit
- einer Trenneinrichtung (6) zum elektrischen Trennen von elektrischen Leitungen einer Fahrzeugbatterie (2), und
- einer Detektionseinrichtung (4) zum Ermitteln von Feuchtigkeit, derart,
- dass die Detektionseinrichtung (4) bei einer detektierten Feuchtigkeit (12) die Trenneinrichtung (6) aktiviert, so dass die elektrische Leitung (8) elektrisch getrennt wird,
**dadurch gekennzeichnet,**
- **dass** die elektrische Leitung eine Verbindung von Batteriezellen innerhalb der Batterie (2) ist, und
- **dass** die Detektionseinrichtung (4) in der Fahrzeugbatterie (2) angeordnet ist, und dass die Detektionseinrichtung (4) bei in die Batterie eindringendem Wasser die Trenneinrichtung (6) zum Trennen der Verbindung zwischen den Batteriezellen aktiviert.

2. Vorrichtung nach Anspruch 1, **dadurch gekennzeichnet, dass** die Fahrzeugbatterie (2) eine Hochvoltbatterie ist.

3. Vorrichtung nach Anspruch 1, **dadurch gekennzeichnet, dass** die Detektionseinrichtung (4) zumindest einen Feuchtigkeitssensor (4) aufweist.

4. Vorrichtung nach Anspruch 3, **dadurch gekennzeichnet, dass** der Feuchtigkeitssensor ein Wassersensor (4b) ist.

5. Vorrichtung nach Anspruch 1, **dadurch gekennzeichnet, dass** die Detektionseinrichtung (4) zumindest einen Regensensor (4a) aufweist.

6. Vorrichtung nach Anspruch 5, **dadurch gekennzeichnet, dass** die Trenneinrichtung (6) aktiviert durch den Regensensor (4a) die Batteriekontakte (3) bei einem detektierten Regen zerstörungsfrei mechanisch von der elektrischen Verteilung (8) trennt und dass die Trenneinrichtung (6) aktiviert durch einen Wassersensor (4b) die Batteriekontakte bei einer Umspülung mit Wasser pyrotechnisch von der elektrischen Verteilung (8) trennt.

7. Elektrofahrzeug mit einer Vorrichtung nach Anspruch 1.

8. Verfahren zur elektrischen Absicherung eines Elektrofahrzeugs mit
- Ermitteln von Feuchtigkeit innerhalb des Elektrofahrzeugs, und
- elektrisches Trennen einer Leitung der Fahrzeugbatterie bei detektierter Feuchtigkeit,
**dadurch gekennzeichnet,**
**dass** die elektrische Leitung eine Verbindung zwischen Batteriezellen innerhalb der Batterie (2) ist,
- **dass** eine Detektionseinrichtung (4) in der Fahrzeugbatterie (2) angeordnet ist, und dass eine Trenneinrichtung bei in die Batterie eindringendem Wasser durch die Detektionseinrichtung (4) zum Trennen der Verbindung zwischen den Batteriezellen aktiviert wird.

## Claims

1. Device for electrically protecting an electric vehicle comprising
- a disconnecting unit (6) for electrically disconnecting electric lines of a vehicle battery (2), and
- a detection unit (4) for determining moisture, in such a way
- that the detection unit (4) activates the disconnecting unit (6) when moisture (12) is detected, so the electric line (8) is electrically disconnected,
**characterized in that**
- the electric line is a connection of battery cells within the battery (2), and
- that the detection unit (4) is arranged in the vehicle battery (2), and that the detection unit (4) activates the disconnecting unit (6) to disconnect the connection between the battery cells, when water arrives within the battery.

2. Device according to claim 1, **characterised in that** the vehicle battery (2) is a high voltage battery.

3. Device according to claim 1, **characterised in that** the detection unit (4) has at least one moisture sensor (4).

4. Device according to claim 3, **characterised in that** the moisture sensor is a water sensor (4b).

5. Device according to claim 1, **characterised in that** the detection unit (4) has at least one rain sensor (4a).

6. Device according to claim 5, **characterised in that** the disconnecting unit (6) when activated by the rain sensor (4a) disconnects the battery contacts (3) mechanically from the electric distribution system (8) when rain is detected, and that the disconnecting unit (6), when activated by the water sensor (4b) disconnects the battery contacts pyrotechnically from the electric distribution system (8) when surrounded by water.

7. Electric vehicle comprising a device according to claim 1.

8. Method for electrically protecting an electric vehicle comprising
- determining moisture within the electric vehicle, and
- electrically disconnecting a line of the vehicle battery when moisture is detected,
**characterized in that**
- the electrical line is a connection between battery cells within the battery (2),
- the detection unit (4) is arranged within the vehicle battery, and that a disconnecting unit is activated by the detecting unit (4) to disconnect the connection between the battery cells when water arrives within the battery.

## Revendications

1. Dispositif de protection électrique pour un véhicule électrique, qui est doté
- d'un système de séparation (6) pour la séparation électrique de conduites électriques d'une batterie (2) de véhicule automobile
et
- d'un système de détection (4) pour la détection d'humidité,
de telle manière
- que le système de détection (4), lors de la détection d'humidité (12), active le système de séparation (6) afin que la conduite (8) soit séparée électriquement,
**caractérisé en ce que**
- la conduite électrique est une liaison de cellules de batterie à l'intérieur de la batterie (2) et
- le système de détection (4) est agencé dans la batterie (2) du véhicule automobile et que, lorsque de l'eau pénètre dans la batterie, le système de détection (4) active le système de séparation (6) pour supprimer la liaison entre les cellules de la batterie.

2. Dispositif selon la revendication 1,
**caractérisé en ce que** la batterie (2) de véhicule automobile est une batterie à haute tension.

3. Dispositif selon la revendication 1,
**caractérisé en ce qu**e le système de détection (4) est doté d'au moins un détecteur d'humidité (4).

4. Dispositif selon la revendication 3,
**caractérisé en ce que** le détecteur d'humidité est un détecteur d'eau (4b).

5. Dispositif selon la revendication 1,
**caractérisé en ce que** le système de détection (4) est doté d'au moins un détecteur de pluie (4a).

6. Dispositif selon la revendication 5,
**caractérisé en ce que** le système de séparation (6), activé par l'intermédiaire du détecteur de pluie (4a), sépare mécaniquement, sans destruction, les contacts de batterie (3) de la distribution électrique (8) lors de la détection de pluie, et que le système de séparation (6), activé par un détecteur d'eau (4b), sépare, de manière pyrotechnique, les contacts de batterie de la distribution électrique (8) lors de la présence d'eau.

7. Véhicule automobile électrique avec un dispositif selon la revendication 1.

8. Procédé de projection électrique d'un véhicule électrique, qui comprend
- la détermination de la présence d'humidité à l'intérieur du véhicule électrique, et
- la séparation électrique d'une conduite de la batterie, du véhicule automobile lors de la détection d'humidité,
**caractérisé en ce que**
- la conduite électrique est une liaison entre des cellules de batterie à l'intérieur de la batterie (2),
- un système de détection (4) est agencé dans la batterie (2) du véhicule automobile et que, lorsque de l'eau pénètre dans la batterie, un système de séparation est activé par le système de détection (4) pour supprimer la liaison entre les cellules de batterie.
